# EUROPÄISCHE PATENTSCHRIFT

(11) **EP 1 406 840 B1**
(45) Veröffentlichungstag und Bekanntmachung des Hinweises auf die Patenterteilung: **22.12.2004**
(21) Anmeldenummer: 02760243.2
(22) Anmeldetag: 12.07.2002
(51) Int. Cl.: C02F 1/20, C02F 1/70

(54) **VERFAHREN UND VORRICHTUNG ZUR DEKONTAMINATION VON WÄSSERN, DIE MIT ORGANISCHEN HALOGENVERBINDUNGEN (HKW) BELASTET SIND**
METHOD AND DEVICE FOR DECONTAMINATING WATERS WHICH ARE LOADED WITH ORGANIC HALOGEN COMPOUNDS (HALOGENATED HYDROCARBONS)
PROCEDE ET DISPOSITIF DE DECONTAMINATION D'EAUX CHARGEES DE COMPOSES ORGANIQUES HALOGENES (HYDROCARBURES HALOGENES)

(30) Priorität: 13.07.2001 DE 10133609
(43) Veröffentlichungstag der Anmeldung: 14.04.2004
(73) Patentinhaber: UFZ-UMWELTFORSCHUNGSZENTRUM Leipzig-Halle GmbH, 04318 Leipzig (DE)
(72) Erfinder: KOPINKE, Franz-Dieter, 04109 Leipzig (DE); MACKENZIE, Katrin, 04683 Naunhof (DE); KÖHLER, Robert, 04315 Leipzig (DE); WEISS, Holger, 04457 Bahlsdorf (DE); GRATHWOHL, Peter, 72070 Tübingen (DE); SCHÜTH, Christoph, 72070 Tübingen (DE)
(74) Vertreter: Rasch, Dorit
(86) Internationale Anmeldenummer: PCT/EP2002/007826
(87) Internationale Veröffentlichungsnummer: WO 2003/006379

(56) Entgegenhaltungen:
- EP-A- 0 933 333
- DE-A- 4 309 469
- DE-A- 19 743 109
- US-A- 5 490 941
- US-A- 5 562 834
- MATHESON L J ET AL: "REDUCTIVE DEHALOGENATION OF CHLORINATED METHANES BY IRON METAL" ENVIRONMENTAL SCIENCE AND TECHNOLOGY, AMERICAN CHEMICAL SOCIETY. EASTON, PA, US, Bd. 28, Nr. 12, 1. November 1994 (1994-11-01), Seiten 2045-2053, XP000473259 ISSN: 0013-936X

## Beschreibung

Die Erfindung betrifft ein Verfahren und eine Vorrichtung zur Reinigung von Wässern, insbesondere von Grundwässern, die stark und komplex mit organischen Halogenverbindungen (HKW) kontaminiert sind. Erfindungsgemäß werden die HKW in den kontaminierten Wässer vorbehandelt und anschließend in die Gasphase überführt. Nachfolgend erfolgt eine reduktive Dehalogenierung bei erhöhten Temperaturen mit Wasserstoff unter Verwendung eines Katalysators. Bevorzugt wird dafür ein Katalysator auf der Basis von Elementen der 8. Nebengruppe des PSE verwendet. Das zu behandelnde Wasser kann Grundwasser oder Abwasser aus Industrie- und Gewerbeanlagen sein.

Stand der Technik für die Reinigung von mit organischen Verbindungen kontaminierten Wässern ist die Adsorption an Aktivkohle oder Adsorberpolymeren (z.B. [A. Kowalzik, K. Pilchowski, Acta hydrochim. hydrobio. 27 (1999) 70-86 und 437-445]). Diese Verfahren weisen einen hohen Entwicklungsstand auf. Sie bewirken jedoch zunächst nur eine Schadstoffverlagerung, nicht deren Zerstörung. Hinzu kommt, dass sie für eine Reihe von polaren oder niedermolekularen Verbindungen, wie z.B. Methyltertiärbutylether (MTBE) oder Vinylchlorid (VC), nur ein sehr begrenztes Adsorptionsvermögen besitzen und die entsprechenden Verfahren deshalb wenig effizient arbeiten.

Zum Stand der Technik zählen ferner Strippverfahren, bei denen die flüchtigen organischen Verbindungen mit Luft aus der Wasserphase ausgeblasen werden [P. Pratner, in: Möglichkeiten und Grenzen der Reinigung kontaminierter Grundwässer, DECHEMA 1997, ISBN 926959-80-0, S.287-298]. Der so erzeugte Abluftstrom wird meist adsorptiv oder durch katalytische Oxidation gereinigt. Die Oxidation von HKW birgt prinzipiell die Gefahr, dass hochtoxische Nebenprodukte, wie polychlorierte Dibenzodioxine und - furane (PCDD/F) gebildet werden. Nachteil dieser Verfahren ist, dass nur flüchtige Verbindungen entfernt werden und das zu reinigende Wasser in Kontakt mit Luftsauerstoff kommt. Dabei können Eisen- und Manganverbindungen ausgefällt werden, die zu einem schnellen Versatz der Strippkolonnen führen.

Eine moderne Alternative für die passive Reinigung CKW-kontaminierter Grundwässer stellen Eisenwände oder mit Eisen gefüllte Reaktoren dar [T. Bigg, S. J. Judd, Environ. Technol. 21 (2000) 661-670], [J. Farrell, M. Kason, N. Melitas, T. Li, Environ. Sci. Technol. 34 (2000) 514-521] bei denen das zu reinigende Grundwasser ein Festbett aus körnigem, metallischem Eisen durchströmt. Dabei erfolgt eine reduktive Dechlorierung der CKW gemäß der Reaktionsgleichung R-Cl + Fe⁰ + H₂O → R-H + Fe²⁺ + OH⁻ + Cl⁻. Nachteil dieser heterogenen chemischen Reaktion ist eine für viele HKW geringe Reaktionsgeschwindigkeit (z.B. für VC eine Halbwertszeit von 12,5 h bei einem Angebot von 1000 m² Eisenoberfläche pro 1 zu behandelnden Wassers [R. W. Gillham, S. F. O'Hannesin, Ground Water 32 (1994) 958-967]). Polychlorierte Verbindungen reagieren entweder in einem Zuge zu chlorfreien Kohlenwasserstoffen, oder sie werden stufenweise dechloriert. Dabei entstehen z.B. aus Trichlorethen (TCE) neben Ethen und Ethan auch die partiell dechlorierten Produkte cis-Dichlorethen (cis-DCE) und VC. Die Auslegung eines Festbettreaktors mit Eisenfüllung richtet sich nach der am langsamsten reagierenden Kontaminante. Im o.g. Beispiel reagieren die Zwischenprodukte cis-DCE und VC viel langsamer als die ursprüngliche Kontaminante TCE. Für einen weitgehend vollständigen Umsatz (> fünf Halbwertszeiten) sind lange Verweilzeiten und damit große Reaktoren erforderlich. Eine solche Auslegung kann dann sinnvoll sein, wenn die Eisenreaktoren in situ in einem kontaminierten Grundwasseraquifer errichtet und von einem langsam fließenden Grundwasserstrom passiert werden, z.B. in Form permeabler Reaktionswände oder als ,Funnel and Gate'-Bauwerke. Sehr große Reaktoren sind jedoch wenig geeignet für ex situ-Anlagen mit hohen Durchsatzraten. Hinzu kommt, dass die chemische Reaktion zwischen Eisen und HKW für eine Reihe von HKW mit Umweltrelevanz, z.B. Methylenchlorid, chlorierte Benzole, Phenole und Biphenyle, völlig versagt.

Eine weitere Möglichkeit zur Umwandlung von HKW besteht in der katalytischen Hydrodehalogenierung mit Wasserstoff als Reduktionsmittel gemäß der Reaktionsgleichung R-Cl + H₂ → R-H + HCl [W. W. McNab, R. Ruiz, M. Reinhard, Environ. Sci. Technol. 34 (2000) 149-153]. Diese Reaktion läuft nur an Katalysatoren ab, die die Fähigkeit zur chemischen Aktivierung von molekularem Wasserstoff besitzen, z.B. Pd, Ru, Ni u.a. [Y. I. Matatov-Meytal, M. Sheintuch, Ind. Eng. Chem. Res. 37 (1998) 309-326]. Der Einsatz von Metallkatalysatoren zur Reinigung insbes. von stark verschmutzten Wässern ist mit einer Reihe von Problemen behaftet. Das Hauptproblem besteht in einer schnellen Desaktivierung des Katalysators, so dass die für einen technischen Einsatz notwendigen Standzeiten von Monaten bis Jahren bei weitem nicht erreicht werden [A. J. Lecloux, Catalysis Today 53 (1999) 23-34]. Eine der Ursachen für die Desaktivierung ist die Anwesenheit oder Bildung von Schwefelverbindungen (Sulfid oder organische Schwefelverbindungen), die häufig in anaeroben, stark kontaminierten Wässern als Begleitstoffe vorliegen. Die Bildung von Sulfid kann jedoch auch in situ durch mikrobielle Sulfatreduktion in Anwesenheit des als Reduktionsmittel für die Dehalogenierung benötigten Wasserstoffs erfolgen (4 H₂ + SO₄²⁻ → S²⁻ + 4 H₂O), so dass eine vorgeschaltete chemische Sulfidentfernung (z.B. durch Fällung) hier nicht zum Erfolg führen würde.

In DE 199 52 732 wird ein Verfahren beschrieben, bei dem der Edelmetall-Katalysator in eine hydrophobe Polymermembran eingeschlossen wird, um ihn gegen Desaktivierung und Erosion zu schützen. Weiterhin ist bekannt, die Metallkomponente des Katalysators in einen hydrophoben Zeolithen einzubetten [C. Schüth, M. Reinhard, Applied Catal. B 18 (1997) 215-221]. Weder die Polymermembran noch die Porenstruktur des Zeolithgerüstes können die Edelmetalle zuverlässig gegen Vergiftung durch freien Schwefelwasserstoff schützen, da dieser ebenso penetrationsfähig ist wie die zu entfernenden HKW. Eine vorgeschaltete Entfernung von Sulfid führt hier nicht zum Erfolg, weil der zugeführte Wasserstoff unter anaeroben Bedingungen stets von Mikroorganismen zur Bildung von Sulfid genutzt wird und damit Sulfid unmittelbar am Katalysator neu gebildet wird. Die Folge ist eine schnelle Katalysatordesaktivierung.

Ein bisher ungelöstes Problem der katalytischen Hydrodehalogenierung besteht darin, dass viele gesättigte HKW bei niedrigen Temperaturen, wie sie für Grund- und Abwässer typisch sind, nur sehr langsam oder gar nicht reagieren. Eine deutliche Erhöhung der Reaktionstemperatur in der Wasserphase ist aber aus energetischen und damit Kostengründen nicht vertretbar. Die oben beschriebenen, verbesserten Katalysatormatrices können das unzureichende Wirkungsspektrum von Edelmetallkatalysatoren für gesättigte HKW ebenfalls nicht erweitern.

Heterogen-katalysierte Reaktionen in wässriger Phase weisen das grundsätzliche Problem auf, dass eine Transportlimitierung der Reaktanden die Ausnutzung der vollen Katalysatoraktivität verhindert. Im Porensystem des porösen Katalysatorträgers bzw. in der Polymermembran eines polymergestützten Katalysators erfolgt der Stofftransport ausschließlich durch molekulare Diffusion. Dies ist in flüssiger Phase bzw. in Polymerphase ein relativ langsamer Vorgang (D ≈ 10⁻⁵ cm² s⁻¹). Bei schneller katalytischer Reaktion erreichen die umzuwandelnden Schadstoffmoleküle nur die äußere Randzone des Katalysatorkorns. Das innere Porenvolumen bleibt somit weitgehend ungenutzt. Zur Minimierung dieses Effektes wären möglichst geringe Kornabmessungen wünschenswert. Dem steht jedoch der hohe Strömungswiderstand eines feinkörnigen Festbetts im Wege.

Die Anwendung von Katalysatoren zur reduktiven Dehalogenierung von HKW in der Gasphase bei erhöhten Temperaturen ist prinzipiell bekannt (z.B. [L. S. Vadlamannati, V. I. Kovalchuk, J. L. d'Itri, Cat. Lett. 58 (1999) 173-178], [S. Deshmukh, J. L. d'Itri, Cat. Today 40 (1998) 377-385], [Y. I. Matatov-Meytal, M. Sheintuch, Ind. Eng. Chem. Res. 39 (2000) 18-23], [E.-J. Shin, M. A. Keane, Cat. Lett. 58 (1999) 141-145], C. Menini, C. Park, E. Shin, G. Tavoularis, M. A. Keane, Catalysis Today 62 (2000) 355-366]). Auch die Patentschrift US 5 562 834 offenbart ein Verfahren zur HKW-Entfernung aus Abwasser mittels Dampfstrippung und nachtfolgender katalytisch-reduktiver Dehalogenierung in der Gasphase. Die bekannten Verfahren entsorgen bzw. verwerten HKW, die als Abfälle in konzentrierter Form vorliegen, oder betreffen die Regeneration mit HKW beladener Adsorber. Im Unterschied zur trockenen Konsistenz von konzentrierten Abfällen bewirkt eine wässrige Matrix, dass die durch Strippen erzeugten Gasströme feucht anfallen. Dies hat i.d.R. Auswirkungen auf nachfolgende chemische Behandlungsschritte. Eine Anwendung zur direkten katalytischen Reinigung von Grund- oder Abwasserströmen in der Wasserphase ist bisher nicht möglich.

Der Erfindung lag deshalb die Aufgabe zugrunde, ein Verfahren zu entwickeln und eine Vorrichtung bereitzustellen, die das Potenzial von Katalysatoren zur reduktiven Dehalogenierung von HKW voll auszunutzen gestatten, eine über lange Betriebszeiten stabile Aktivität des Katalysators sichern und auf ein möglichst breites Spektrum unterschiedlicher Halogenverbindungen, wie halogenierte C₁- und C₂-Verbindungen, insbesondere Methylenchlorid, Bromoform, VC, DCE, TCE, Tetrachlorethen (PCE), Tetrachlorethane (TeCA), sowie halogenierte Benzole anwendbar sind.

Erfindungsgemäß wird diese Aufgabe durch Vorbehandlung der HKW in kontaminierten Wässern zur Umwandlung von schwer flüchtigen Verbindungen in leichter flüchtige Komponenten und anschließender Überführung der HKW aus der zu reinigenden wässrigen Phase in die Gasphase mit nachfolgender katalytischer reduktiver Dehalogenierung über geeignete Katalysatoren, gelöst. Die Erfindung wird mit einem Verfahren und einer Vorrichtung gemäß den Ansprüchen 1 und 11 realisiert. Die jeweiligen Unteransprüche stellen Vorzugsvarianten dar.

Die katalytische Dehalogenierung in der Gasphase kann erfindungsgemäß bei Temperaturen, die höher als die Umgebungstemperaturen sind, mit hoher Geschwindigkeit und Selektivität durchgeführt werden. Bevorzugte Reaktionstemperaturen sind 50°C bis 400°C, insbesondere 100°C bis 350°C. Die bevorzugten Verweilzeiten liegen im Bereich von 0,1 bis 10 s, das entspricht einer Katalysatorbelastung W/F = 360 bis 36 000 v/vh in einem wasserstoffhaltigen Gasstrom, wobei der Wasserstoffanteil 0,1 bis 99 Vol%, vorzugsweise 0,5 bis 25 Vol%, ganz besonders bevorzugt 1 bis 10 Vol% beträgt.

Der Übergang von der kontaminierten Wasser- in die Gasphase erzeugt ein ,sauberes' Arbeitsmedium. Die effektive Reaktionsgeschwindigkeit der meisten HKW ist unter diesen Bedingungen mehr als 100 000 mal höher als in Wasser bei 15°C an Eisen oder mehr als 1 000 mal höher als in Wasser bei 15°C an vergleichbaren Trägerkatalysatoren. Der Phasenübergang führt gleichzeitig zu einer Aufkonzentrierung der HKW im Trägermedium, ausgedrückt als g HKW pro g Strippgas im Vergleich zu g HKW pro g Wasser, um einen Faktor von ≥ 100. Diese Aufkonzentrierung macht eine Aufheizung des Produktstromes auf Temperaturen bevorzugt oberhalb 100°C akzeptabel.

Als Katalysatoren werden inbesondere Metalle der 8. Nebengruppe auf porösen Trägern, wie γ-Aluminiumoxid, Alumosilikaten, Zeolithen, Silikagel etc., in pelletierter Form mit Metallgehalten von 0,1 bis 20 Ma%, vorzugsweise 0,5 bis 2 Ma%, verwendet. Insbesondere werden Palladium und Nickel eingesetzt, besonders bevorzugt ist Palladium. Nickel weist zwar auch eine hohe katalytische Aktivität für die Dehalogenierungsreaktion auf, es verliert jedoch in Gegenwart von HKW seine Hydrieraktivität, so dass im Unterschied zu Pd-Katalysatoren verstärkt ungesättigte Reaktionsprodukte gebildet werden.

Das erfindungsgemäße Verfahren umfasst ferner Behandlungsstufen in der Wasserphase, die eine Überführung von schlecht strippbaren HKW in besser strippbare Verbindungen bewirken, ohne dass bei dieser Behandlung bereits die Notwendigkeit zur vollständigen Dehalogenierung bzw. Detoxifizierung besteht.

Überraschend wurde gefunden, dass die Anwesenheit flüchtiger Schwefelverbindungen, wie z.B. Schwefelwasserstoff, einen viel geringeren inhibierenden Effekt auf die Katalysatoraktivität ausübt, als dies von ihrer Wirkung bei Reaktionsführung in der wässrigen Phase bekannt ist. Die eintretende partielle Vergiftung des Katalysators in der Gasphase ist reversibel und verschwindet nach Unterbindung der Schwefelzufuhr unter normalen Reaktionsbedingungen, ggf. auch durch Behandlung im Wasserstoffstrom bei erhöhter Temperatur (≤ 400°C), innerhalb weniger Stunden.

Eine Deaktivierung des Katalysators durch Bewuchs mit Biofilmen oder andere biologische Phänomene ist a priori ausgeschlossen, da der Katalysator nicht in direkten Kontakt mit dem Wasser kommt und die Reaktionsbedingungen biologische Aktivitäten ausschließen. Gleiches gilt für die Ablagerung von anorganischen Präzipitaten auf der Katalysatoroberfläche, die in wässriger Phase häufig als Ursache für Desaktivierungen beobachtet wurde.

Die räumliche Trennung von Katalysator und Wasserphase hat den weiteren Vorteil, dass die Metallkomponente, unabhängig vom pH-Wert des Wassers und der Anwesenheit von potenziellen Komplexbildnern, nicht vom Träger abgelöst werden kann. Dies würde nicht nur zu Aktivitätsverlusten führen, sondern gleichzeitig eine zusätzliche Metallkontamination des Wassers (z.B. durch Ni) zur Folge haben.

Die katalytische reduktive Dehalogenierung in der Gasphase bei Temperaturen von ≤ 400°C, bevorzugt ≤ 350°C verläuft selbst für chemisch sehr stabile Verbindungen, wie z.B. Methylenchlorid, die in der wässrigen Phase überhaupt nicht reduktiv dehalogeniert werden können, schnell und vollständig. Dafür reichen Verweilzeiten im Reaktor von weniger als 10 s, meist unter 1 s, aus. Produkte der vollständigen Dehalogenierung von C₁- und C₂-HKW sind ausschließlich Methan, Ethan und Ethen, die bei geringen Mengenströmen ohne Nachbehandlung in die Atmosphäre entlassen oder im Fall hoher Massenströme gemeinsam mit überschüssigem Wasserstoff problemlos verbrannt werden können. Im Fall der Anwendung von Palladium als katalytisch aktives Metall werden olefinische Zwischenprodukte vollständig hydriert, so dass ausschließlich Methan und Ethan als Endprodukte verbleiben.

Ungesättigte HKW, wie z.B. VC und TCE, werden bereits bei niedrigen Temperaturen (< 100°C) an den verwendeten Katalysatoren schnell und vollständig umgewandelt. Dabei tritt als Nebenreaktion eine Hydrierung der ungesättigten HKW auf. Aus VC entsteht z.B. bei 50°C an Pd-Katalysatoren überwiegend Ethylchlorid. Die Hydrierung kann aus toxikologischer Sicht bereits eine signifikante Reduzierung des Gefahrenpotenzials bedeuten. Trotzdem ist sie unerwünscht, weil die entstehenden gesättigten HKW, z.B. Ethylchlorid aus VC, stabiler sind als die Ausgangsprodukte und höhere Reaktionstemperaturen für eine vollständige Dehalogenierung erfordern. Deshalb ist es zweckmäßig, in Abhängigkeit von den zu eliminierenden HKW von Anfang an so hohe Reaktionstemperaturen einzustellen, dass die Selektivität der Umwandlung zu halogenfreien Kohlenwasserstoffen verschoben ist. Dafür sind an den bevorzugt verwendeten Pd-Katalysatoren i.d.R. Temperaturen ≥ 100°C (vorzugsweise ≥ 150°C) erforderlich.

Der Diffusionskoeffizient von Molekülen liegt in der Gasphase um rund 3 Größenordnungen über jenen in der wässrigen Phase. Dies erleichtert den schnellen An- und Abtransport der Reaktanden an die aktiven Zentren des Katalysators und vermeidet eine Transportlimitierung der Reaktionsgeschwindigkeit. Somit können auch Katalysatorzentren im Inneren poröser Träger ausgenutzt werden. Die Geschwindigkeit der meisten chemischen Reaktionen steigt bekanntlich exponentiell mit der Temperatur an. Eine Reaktionsführung in der Gasphase bei erhöhten Temperaturen (100 bis 350°C) ermöglicht deshalb viel höhere Reaktionsgeschwindigkeiten als bei Umgebungstemperatur (für Grundwasser ca. 15°C) in der wässrigen Phase. Dies führt dazu, dass die erforderlichen Katalysatormengen und die sie aufnehmenden Reaktoren viel kleiner dimensioniert werden können.

Die Überführung von flüchtigen Kontaminanten aus einer Wasser- in die Gasphase (Strippen) geschieht gewöhnlich in speziell dafür ausgelegten Strippkolonnen, durch die Wasser und Strippgas im Gegenstrom geleitet und miteinander in innigen Kontakt gebracht werden. Der Dampfdruck pᵢ der zu entfernenden flüchtigen Verbindungen *i* wird durch den Henry-Koeffizienten K_{H,i} = pᵢ / c_{i in Wasser} beschrieben. Die Größe des Henry-Koeffizienten der am wenigsten flüchtigen Kontaminante bestimmt maßgeblich das Mengenverhältnis Strippgas zu Wasser, das erforderlich ist, um einen bestimmten Reinigungsgrad zu erreichen. Für das praktisch kostenfrei verfügbare Strippgas Luft ist dieses Mengenverhältnis unkritisch. Für ein inertes Strippgas, z.B. Stickstoff, ist die Minimierung des Mengenverhältnisses Strippgas zu Wasser jedoch ein wesentlicher Effizienzfaktor. Deshalb wird für das erfindungsgemäße Verfahren eine Strippung unter vermindertem Druck bevorzugt. Auf diese Weise wird der bereitzustellende und zu behandelnde Strippgasstrom minimiert.

Als bevorzugte und besonders elegante Strippvariante kann die Unterdruckstrippung durch Verwendung eines Hohlfasermembran-Moduls [A. A. Keller, B. G. Bierwagen, Environm. Sci. Technol. 35 (2001) 1875-1879] durchgeführt werden. Im Unterschied zu Strippverfahren nach dem Stand der Technik treten Wasser- und Gasphase nicht in direkten Kontakt, sondern strömen, durch eine dünne, poröse Membran mit hydrophoben Eigenschaften voneinander getrennt, aneinander vorbei. Dabei permeieren die flüchtigen organischen Verbindungen aus der Wasser- in die Gasphase. Das Strippgas hat nur noch eine Spülfunktion - die organischen Dämpfe abzutransportieren. Diese Anordnung ermöglicht die Absenkung des Druckes auf der Gasseite (z.B. von 100 kPa auf 5 kPa) und damit eine Minimierung des o.g. Mengenverhältnisses ohne Abstriche am Reinigungsgrad. Gleichzeitig wird der Anteil an mitverdampfendem Wasser durch die hydrophoben Eigenschaften der Polymermembran minimiert.

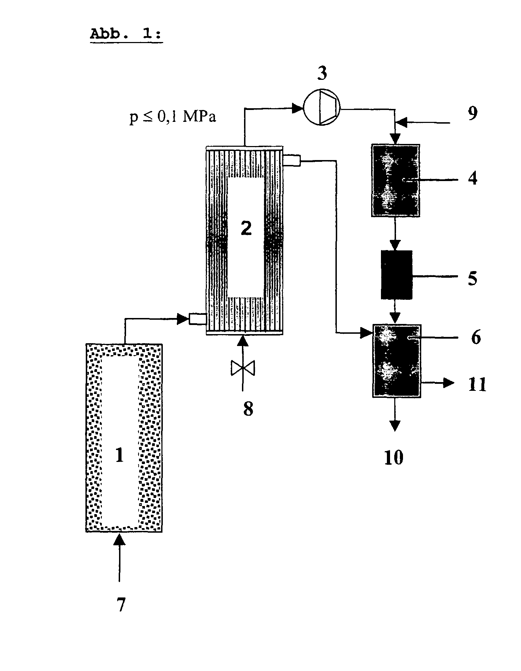

Für eine katalytische Nachbehandlung des Strippgases ist es besonders vorteilhaft, den Reaktor auf der Druckseite der Vakuumpumpe (vgl. Abb. 1) anzuordnen. Dies führt zu kleineren Gasvolumenströmen und damit zu geringeren Apparatedimensionen. Geringe Wassergehalte des Strippgases sind für einen stabilen Langzeitbetrieb des Dehalogenierungskatalysators günstig. Die hydrophobe Membran im Strippmodul macht eine zusätzliche Trocknungsstufe überflüssig.

Für die Kosten der Bereitstellung von Strippgas, z.B. Stickstoff, ist die erforderliche Reinheit ein wesentlicher Kostenfaktor. Insbesondere konkurriert anwesender Restsauerstoff mit der Hydrodehalogenierung von HKW um den angebotenen Wasserstoff gemäß 2 H₂ + O₂ → 2 H₂O. Experimente mit den bevorzugt verwendeten Pd-Katalysatoren haben überraschend gezeigt, dass bei Temperaturen > 100°C die Hydrodehalogenierung der meisten HKW schneller verläuft als die Sauerstoffreduktion. In mit HKW beladenen Strippgasen konnte auch dann noch eine vollständige Hydrodehalogenierung erreicht werden, wenn ein stöchiometrischer Unterschuss an Wasserstoff gegenüber der Summe von HKW und O₂ vorlag.

Organisch kontaminierte Grundwässer sind häufig vollständig anaerob, weil ursprünglich vorhandener Sauerstoff durch mikrobielle Aktivität aufgezehrt worden ist. Die gesamte Wasserchemie, insbesondere das Fe(II)-Fe(III)-Gleichgewicht, ist auf ein niedriges Redoxpotenzial eingestellt. Der Kontakt mit Sauerstoff könnte zu schwer beherrschbaren Ausfällungen führen. Ein entscheidender Vorteil des erfindungsgemäßen Verfahrens ist es, dass das zu dekontaminierende Wasser während der gesamten Behandlung unter anaeroben Bedingungen gehalten werden kann und die ablaufenden chemischen Reaktionen durchweg Reduktionsreaktionen sind. Dies führt weiterhin dazu, dass sich keine partiell halogenierten und gleichzeitig partiell oxidierten Intermediate mit hohem Gefährdungspotenzial, wie z.B. chlorierte Essigsäuren, neu bilden können.

Die Flüchtigkeit von organischen Verbindungen in wässriger Lösung wird durch ihren Henry-Koeffizienten beschrieben. Seine dimensionslose Form ist durch die Gleichung K_{H,i} = C_{i,Gasph.} / c_{i ,Wasser} definiert, mit cᵢ (in g/l) als Konzentration der Komponente i in der Gasphase bzw. in der Wasserphase. Für HKW kann K_{H} über einen weiten Bereich variieren, typischerweise von 0,01 bis 2 [J. Staudinger, P. V. Roberts, Crit. Rev. in Environm. Sci. Technol. 26 (1996) 205-297]. Kontaminanten mit einem kleinen Henry-Koeffizienten sind nur mit hohem Aufwand an Strippgas oder bei erhöhten Wassertemperaturen zu entfernen. Beides bedeutet erhebliche wirtschaftliche Nachteile für das Verfahren. Um die Überführung aus der Wasserphase in die Gasphase effektiv zu gestalten, müssen HKW mit einem kleinen Henry-Koeffizienten (K_{H} < 0,1) durch chemische Reaktion noch in der Wasserphase in Verbindungen mit möglichst hohem Henry-Koeffizienten umgewandelt werden. HKW mit niedrigem K_{H} sind z.B. 1,1,2,2-TeCA (K_{H} = 0,015 bei 20°C), Bromoform (K_{H} = 0,02) und 1,1,2-Trichlorethan (K_{H} = 0,03).

Erfindungsgemäß wird diese Umwandlung durch verschiedene, dem konkreten stofflichen Problem angepasste Verfahrensstufen erreicht. Im Unterschied zu Behandlungsverfahren nach dem Stand der Technik, die auf eine möglichst weitgehende *Eliminierung* von HKW abzielen, geht es hier um eine *Erhöhung der Flüchtigkeit* der Kontaminanten. 1,1,2,2-TeCA (K_{H} = 0,015) kann z.B. durch Hydrolyse im alkalischen Milieu in TCE (K_{H} = 0,4) überführt werden, gemäß C₂H₂Cl₄ + OH⁻ → C₂HCl₃ + H₂O + Cl⁻. Die Hydrolyse verläuft bei einem pH-Wert von 11 mit einer Halbwertszeit von ≤10 min. TCE ist kein akzeptables Endprodukt einer Dekontamination. Die Flüchtigkeit des zu entfernenden HKW wird jedoch um den Faktor 27 erhöht und damit erfindungsgemäß für eine Gasphasenbehandlung viel leichter verfügbar gemacht.

Eine Alternative zur alkalischen Hydrolyse ist die reduktive Dehalogenierung in wässriger Phase an metallischem Eisen. Die o.g. HKW mit geringer Flüchtigkeit zeichnen sich sämtlich durch hohe Reaktionsgeschwindigkeiten an Eisenoberflächen aus [M. M. Scherer, B. A. Balko, D. A. Gallagher, P. A. Tratnyek, Environ. Sci. Technol. 32 (1998) 3026-3033; T. L. Johnson, M. M. Scherer, P. A. Tratnyek, Environ. Sci. Technol. 30 (1996) 2634-2640]. Dies gestattet, sie nach dem Stand der Technik in einem mit Eisen gefüllten Festbettreaktor mit vertretbaren Abmessungen umzuwandeln. Die Reaktionsprodukte (Ethen, Ethan, Methan und partiell dehalogenierte HKW) sind sämtlich leichter flüchtig als die Ausgangsverbindungen und im Membranmodul problemlos aus dem Wasser entfernbar, um sie dann im Gasphasenreaktor vollständig zu dehalogenieren.

Noch schneller als an metallischem Eisen reagieren einige HKW an metallischem Zink. Das besonders schwer flüchtige 1,1,2,2-TeCA z.B. hat an Zink eine um rund 3 Größenordnungen höhere Reaktionsgeschwindigkeit pro Oberflächeneinheit als an Eisen [W. A. Arnold, W. P. Ball, A. L. Roberts, J. Contam. Hydrol. 40 (1999) 183-200]. Allerdings bleibt die schnelle Dehalogenierung auf der Stufe der 1,2-Dichlorethene stehen, wodurch sie für Dekontaminationsverfahren nach dem Stand der Technik wenig attraktiv erscheint. Dichlorethene sind viel leichter flüchtig (K_{H} = 0,35 bzw. 0,15 für cis und trans-1,2-DCE) als die Ausgangsverbindung. Das bei der Dehalogenierungsreaktion in Lösung gehende Zink ist für ein gereinigtes Wasser nicht tolerierbar. Es kann z.B. durch einfache Passage einer nachgeschalteten Eisenschüttung nahezu vollständig wieder entfernt werden.

Die letzten drei Beispiele machen deutlich, wie die erfindungsgemäße Verfahrenskombination von Strippen plus katalytischer Gasphasendehalogenierung den Spielraum für vorgeschaltete Stoffwandlungen erweitert.

Das erfindungsgemäße Verfahren nutzt den bekannten Effekt einer exponentiellen Erhöhung der Reaktionsgeschwindigkeit mit steigender Temperatur aus. Die Erwärmung von Produktströmen ist ein energieaufwendiger Schritt, der die Wirtschaftlichkeit eines Verfahrens maßgeblich bestimmt. So würde die Erwärmung des zu behandelnden Wassers von 15 auf 150°C einschließlich der Wasserverdampfung einen Energieeinsatz von mindestens 2 500 MJ/m³ erfordern. Gemäß dem vorliegenden Verfahren wird z.B. ein Gasstrom von 3 m³ Stickstoff pro m³ Wasser, der die gesamte Schadstofffracht enthält, auf ca. 150°C erwärmt. Der dafür erforderliche Energieeinsatz beträgt nur rund 0,16 MJ, d.i. weniger als 0,1% des Energieaufwandes bei direkter Erwärmung des Wassers auf die gleiche Reaktionstemperatur. Dieser Vergleich macht deutlich, welch enormen Effizienzgewinn die Überführung der HKW aus der Wasserphase in die Gasphase ermöglicht.

Trotz einer höheren Schwefelresistenz von Dehalogenierungskatalysatoren in der Gasphase im Vergleich zur Wasserphase sind Schwefelverbindungen starke Katalysatorgifte, deren Kontakt mit dem Katalysator weitestgehend zu verhindern ist. Zinkoxid ist als hocheffektiver H₂S-Absorber bekannt. Im erfindungsgemäßen Verfahren wird optional ZnO als Absorber in der Gasphase statt in der Wasserphase verwendet. Damit ist analog zu den Metallkomponenten des Katalysators (z.B. Ni oder Pd) ein Eintrag des Zinks in die Wasserphase ausgeschlossen. Diese Sicherheit ist ein weiterer, dem erfindungsgemäßen Verfahren immanenter Vorteil.

Gegenstand der Erfindung ist auch eine Vorrichtung zur Durchführung des erfindungsgemäßen Verfahrens. In Abb. 1 ist die Vorrichtung dargestellt, die wie folgt aufgebaut ist:

Die erfindungsgemäße Vorrichtung zur Dekontamination von Wässern, insbesondere von Grundwässern, die stark und komplex mit HKW belastet sind, umfasst mindestens eine Vorbehandlungskammer 1, einen Strippapparat 2, eine Vakuumpumpe 3, einen Dehalogenierungsreaktor 5 mit Heizung und Katalysator sowie einen Halogenwasserstoff(HX)-Wäscher 6, eine Zuleitung für kontaminiertes Wasser 7, eine Zuleitung für Strippgas 8, jeweils eine Abflussleitung für gereinigtes Strippgas 10 und für dekontaminiertes Wasser 11, eine Zuleitung für Wasserstoff 9 und ggf. einen Absorber 4.

In einer bevorzugten Ausführung der Vorrichtung besteht die Vorbehandlungskammer aus einer in Reihe geschalteten Kaskade von 2 bis 10 Behältern, die eine Gesamtverweilzeit des Wassers von vorzugsweise 10 min bis 2 h ermöglicht und an ihrem Eingang geeignete Vorrichtungen zur Dosierung von flüssigen Chemikalien besitzt. Insbesondere handelt es sich um alkalische Lösungen.

Die Vorbehandlungskammer kann mit granuliertem Eisen gefüllt sein, das Teilchengrößen zwischen 1 und 20 mm und eine spezifische Oberfläche von 50 bis 5 000 m²/kg besitzt oder mit granuliertem Zink, das Teilchengrößen zwischen 1 und 20 mm und eine spezifische Oberfläche von 10 bis 1 000 m²/kg besitzt. Die spezifische Oberfläche wird jeweils mit der BET-Methode bestimmt.

In einer anderen Ausführungsvariante besteht die Vorbehandlungskammer aus mehreren Sektionen, die mit den Eisen- und Zinkschüttungen gefüllt sind, wobei am Ende der Kammer immer eine Eisenschüttung platziert ist.

Der Strippapparat ist bevorzugt ein Hohlfasermembran-Modul, in dem das zu reinigende Wasser und der Strippgasstrom, getrennt durch eine dünne hydrophobe Membran, im Gegenoder Kreuzstrom aneinander vorbeiströmen.

Die Vakuumpumpe ist bevorzugt so dimensioniert, dass sie auch bei hohen Gasflüssen noch einen Enddruck von 10 kPa aufrecht zu erhalten gestattet.

Der Dehalogenierungsreaktor ist mit einer Heizung ausgestattet, die eine Erwärmung des Strippgasstromes auf Temperaturen bis 400°C vor dem ersten Kontakt zwischen Gas und Katalysator gewährleistet, und ist mit einem Schüttbett gefüllt, das den Katalysator, bevorzugt Palladium, auf porösem Träger in pelletierter Form, enthält.

Die Vorrichtung arbeitet bevorzugt nach folgendem beispielhaften Verfahrensschema:
a) Die Vorbehandlungskammer 1, ist z.B. gefüllt mit metallischem Eisen. Das Eisen erfüllt drei Aufgaben - schwer flüchtige HKW in besser strippbare Verbindungen umzuwandeln, durch Korrosion Wasserstoff zu erzeugen und ggf. Schwefelverbindungen, insbesondere Sulfide, zu binden. Das Eisen wird als Granulat, bevorzugt mit einer Porosität von 0,3 bis 0,7 und einer spezifischen Oberfläche von 500 bis 2000 m²/kg, eingesetzt. Alternativ oder zusätzlich zur Eisenfüllung können wie bereits ausgeführt, andere Reagenzien, z.B. Zink, eingebracht werden. Durch die Ausgestaltung der Vorbehandlungskammer als Kaskade von bis zu 10 in Reihe geschalteten Behältern wird eine große Verweilzeit des vorzubehandelnden Wassers erreicht, was eine gleichzeitig geringe Rückvermischung gewährleistet.
b) Strippapparat 2. In diesem Apparat werden die flüchtigen Inhaltsstoffe des Wassers im Gegenstrom mit einem Strippgasstrom, der unter vermindertem Druck stehen kann, aus der Wasserphase entfernt. Der Strippapparat kann eine Vakuumstrippkolonne oder bevorzugt ein Hohlfasermembran-Modul sein.
c) Der optionale Absorber 4, z.B. mit ZnO, erfüllt die Aufgabe, Spuren von eventuellen gestrippten Schwefelverbindungen, insbesondere Schwefelwasserstoff, zu absorbieren und damit eine Deaktivierung des Katalysators zuverlässig zu verhindern.
d) Der Dehalogenierungsreaktor 5 ist das Kernstück des Verfahrens. Die gestrippten HKW werden hier bei erhöhter Temperatur über einem Katalysatorfestbett in Gegenwart von Wasserstoff vollständig dehalogeniert.
e) Im Halogenwasserstoff(HX)-Wäscher 6 wird der HX-haltige Reaktionsgasstrom mit dekontaminiertem Prozesswasser gewaschen, um den Halogenwasserstoff vollständig aus dem Reaktionsgas zu entfernen. Dabei wird der nach dem (Eisen)Reaktor alkalisch reagierende Wasserstrom in seinem pH-Wert abgesenkt.

### Zusammenfassend ist festzustellen:

Die Erfindung betrifft ein chemisches Verfahren und eine Vorrichtung zur Dekontamination von Wässern, insbesondere von Grundwässern, die stark und komplex mit organischen Halogenverbindungen (HKW) belastet sind. Erfindungsgemäß wird die Dekontamination sowohl in der Wasser- als auch in der Gasphase durchgeführt. Ziel der Vorbehandlung in der Wasserphase, z.B. durch Hydrolyse oder reduktive Dehalogenierung an Metallen, ist eine Umwandlung von schwer flüchtigen in leichter flüchtige, besser strippbare Verbindungen. Zur Überführung der HKW in die Gasphase wird die Wasserphase mit einem Inertgasstrom gestrippt, wobei bevorzugt unter reduziertem Druck gearbeitet wird und ein Membranmodul mit indirektem Kontakt zwischen beiden Phasen zur Anwendung kommt. Die HKW werden in der Gasphase aufkonzentriert und durch reduktive Dehalogenierung mit Wasserstoff unter Verwendung eines Katalysators, bevorzugt Palladium auf porösen Trägern, bei erhöhten Temperaturen in halogenfreie Kohlenwasserstoffe und Halogenwasserstoff gespalten.

### Legende zur Abb. 1:

- 1: Vorbehandlungskammer
- 2: Strippapparat
- 3: Vakuumpumpe
- 4: Absorber
- 5: Dehalogenierungsreaktor mit Heizung und Katalysator
- 6: HX-Wäscher
- 7: Zuleitung für kontaminiertes Wasser und ggf. für Chemikalien
- 8: Zuleitung für Strippgas
- 9: Zuleitung für Wasserstoff
- 10: Abflussleitung für gereinigtes Strippgas
- 11: Abflussleitung für dekontaminiertes Wasser

Anschließend wird die Erfindung an Ausführungsbeispielen näher erläutert ohne sie darauf zu beschränken.

### Ausführungsbeispiele

Das erfindungsgemäße Verfahren wurde in einer Reihe von Batch- und Säulenexperimenten im Labormaßstab, in allen wesentlichen Prozessen und Reaktionen ausführlich getestet.

### Beispiel 1:

### Erzeugung von Wasserstoff in einem Festbett aus Eisengranulat

In Säulenversuchen wurde eine technisch verfügbare, makroporöse Eisencharge (3-5 mm Teilchendurchmesser, 800 m²/kg BET-Oberfläche) mit CKW-kontaminiertem Grundwasser über mehrere Wochen (1000 Porenvolumina Wasserdurchsatz) bis zur Einstellung stationärer Verhältnisse betrieben. Die in der 4. Betriebswoche gemessene, annähernd konstante wasserstoffbildungsrate betrug ca. 0,5 l/kg_{Fe}^{•}d. Der Säulenablauf wies dabei einen pH-Wert von 6,8 bis 7,5 auf.

Eine angenommene Kontamination mit 20 mg/l TeCA erfordert für die vollständige Hydrodechlorierung gemäß der Reaktionsgleichung C₂H₂Cl₄ + 4 H₂ → C₂H₆ + 4 HCl rund 11,4 l H₂ pro m³ Grundwasser. Die Schüttdichte des Eisens in einem Festbettreaktor beträgt ca. 3,5 kg/l. Aus diesen Angaben folgt ein maximaler Durchsatz von 156 m³ Grundwasser pro m³ mit Eisen gefüllten Reaktorvolumens und Tag (= 6,5 v/vh), wenn die durch Eisenkorrosion erzeugte Wasserstoffmenge genau den stöchiometrischen Bedarf der Dechlorierung decken soll.
Eine Vorbehandlung des Grundwassers, bei der z.B. TeCA durch Hydrolyse in TCE überführt wird, würde an dieser Rechnung nichts ändern, weil die Hydrierung der Doppelbindung ebensoviel Wasserstoff verbraucht wie die Hydrogenolyse einer C-C1-Bindung.

Wenn der Durchsatz an zu behandelndem Grundwasser höher gewählt werden soll, ist eine Zuspeisung von externem Wasserstoff in das Strippgas vor dem Membranmodul oder vor dem Katalysator problemlos möglich.

Unter den o.g. Bedingungen wäre der in situ erzeugte Wasserstoff im Grundwasser vollständig löslich (S_{H2} ≈ 20 l/m³ bei 15°C und p_{H2} = 0,1 MPa). Wenn jedoch weitere im Grundwasser gelöste Gase (z.B. Stickstoff und Kohlendioxid) den Gesamtdampfdruck über den Umgebungsdruck erhöhen, kann es zur spontanen Entgasung des Wassers kommen. Der durch Eisenkorrosion erzeugte Wasserstoff steht jedoch unabhängig davon, ob er in gelöster Form oder als Gasblase das Strippmodul erreicht, vollständig für die katalytische Dehalogenierung zur Verfügung. Gelöste oder als Blasen suspendierte Gase unterstützen prinzipiell den HKW-Strippvorgang.

### Beispiel 2:

### Dehalogenierung in der Wasserphase

1 g eines kommerziell verfügbaren Pd-Katalysators (0,5 Ma% Pd auf γ-Al₂O₃) wurde in pelletierter Form (d_{Pellet} ca. 2-3 mm) in 1 1 einer mit Wasserstoff gesättigten Lösung von HKW (je 5 mg/l CH₂Cl₂, CCl₄, Bromoform, VC, TCE, PCE, 1,1,2,2-TeCA, Chlorbenzol) in Trinkwasser gegeben. Die Lösung wurde über Nacht bei 15°C geschüttelt. Durch gaschromatographische Analyse wurden folgende Verbindungen detektiert: Methan, Ethen, Ethan (alle nicht quantifiziert), CH₂Cl₂ (5 mg/l), CHCl₃ (0,5 mg/l), TeCA (4 mg/l) und Benzol (3,5 mg/l). Die Analyse belegt, dass die Mehrzahl der HKW vollständig dehalogeniert wurde. CCl₄ reagiert sowohl in einem Zuge zum Methan als auch durch stufenweise Dechlorierung zum Chloroform, das seinerseits mit viel geringerer Geschwindigkeit weiter dechloriert wird. Methylenchlorid reagiert unter diesen Bedingungen nicht, TeCA nur sehr langsam.

In einem zweiten Versuch wurde das Trinkwasser durch ein Originalgrundwasser von einem hochkontaminierten Standort ersetzt. Dessen Sulfidgehalt betrug ca. 1,5 mg/l. Die Analyse der zugesetzten HKW nach 16 h und 48 h Reaktionszeit ergab, mit Ausnahme des CCl₄ (20% Abnahme), keinerlei messbaren Umsatz. Der Pd-Katalysator war offenbar schnell vergiftet.

### Beispiel 3:

### Dehalogenierung in der Gasphase

Das in Beispiel 2 beschriebene, mit einem HKW-Cocktail gespikte Trinkwasser (≥ 5 l Vorrat) wurde mit einem Gasstrom (50 ml/min), bestehend aus 95 Vol% N₂, 4,5 Vol% H₂ und 0,5 Vol% O₂, bei 15°C durchströmt. Der mit Wasserdampf und den HKW gemäß ihren unterschiedlichen Dampfdrücken beladene Gasstrom wurde bei einer Temperatur von 250°C über den in Beispiel 2 verwendeten Pd-Katalysator (100 mg, Teilchendurchmesser < 1 mm, Rohrreaktor mit 4 mm Innendurchmesser) geleitet. Die Reaktorbelastung betrug ca. 30 000 v/vh. Das Strippgas wurde vor und nach dem Dehalogenierungsreaktor gaschromatographisch analysiert. Hauptprodukte waren Methan, Ethan, Benzol und Cyclohexan. Daneben wurden Spuren an Methylenchlorid und Ethylchlorid nachgewiesen. Der Reaktor konnte über mehrere Tage ohne erkennbaren Aktivitätsverlust unter diesen Bedingungen (bei Nachdosierung der gestrippten HKW in die Wasserphase) betrieben werden. Bei einer Reaktortemperatur von 150°C stiegen die Ausgangskonzentration von Methylenchlorid und TeCA auf ca. 50% bzw. 10% ihrer Reaktoreingangswerte an. Ferner traten Spuren an Dichlorethan auf und es nahm die Konzentration an Ethylchlorid (vermutl. Hydrierprodukt aus VC) zu. Alle anderen HKW wurden auch unter diesen milderen Reaktionsbedingungen noch vollständig umgesetzt.

Nach einer Woche wurde das Trinkwasser durch ein Originalgrundwasser von einem hochkontaminierten Standort, das mit dem gleichen HKW-Cocktail gespikt war, ersetzt. Die Katalysatoraktivität nahm im Verlauf der nächsten Betriebsstunden bei 150°C kontinuierlich ab. Nach 4 Betriebsstunden wurde ein annähernd stationärer Zustand erreicht, bei dem die Umsätze der am wenigsten reaktiven HKW (CH₂Cl₂ und TeCA) nur noch gering waren (≤ 30%) und auch die reaktionsfreudigeren HKW am Reaktorausgang nachweisbar waren.

An dieser Stelle wurde der Strippvorgang unterbrochen, das reine Strippgas direkt auf den Dehalogenierungsreaktor geleitet und dessen Temperatur auf 350°C erhöht. Nach 8 h wurden die ursprünglichen Reaktionsbedingungen (150°C, Strippgasstrom durch gespiktes Trinkwasser) wieder eingestellt. Der Katalysator zeigte die gleiche Dehalogenierungsaktivität wie vor dem Kontakt mit schwefelhaltigen Gasen.
Vor einer erneuten Umstellung der Strippung auf kontaminiertes Grundwasser wurde zwischen Strippung und Reaktor eine Adsorberpatrone, gefüllt mit 100 mg gepulvertem Zinkoxid (ZnO), geschaltet. Nach einer kurzen Retardationsphase, während der die gestrippten HKW am ZnO zurückgehalten wurden, wurde ihre Dehalogenierung weiter verfolgt. Der Katalysator zeigte über Betriebszeiten von mehr als einer Woche eine stabile Aktivität auf hohem, dem Einsatz von Trinkwasser als HKW-Quelle vergleichbaren Niveau.

### Beispiel 4:

### Verwendung eines Hohlfasermembran-Moduls zur Strippung

Für die Laborexperimente wurde ein Hohlfasermembran-Modul der Fa. Celgard Inc. mit einer Austauschfläche von 0,5 m² verwendet (Kapillardurchmesser 0,25 mm, Kapillarwandstärke 0,03 mm, Kapillarmaterial PP). Grundwasser von einem kontaminierten Standort, in dem CKW (u.a. VC, trans- und cis-DCE, TCE, PCE, 1,1,2,2-TeCA) mit einer Gesamtkonzentration von rund 50 mg/l enthalten waren, wurde bei 15°C mit einer Flussrate von 50 ml/min durch die äußere Hülle des Membranmoduls gepumpt. Gleichzeitig wurde auf der Kapillarseite (Innenseite) im Gegenstrom zum Grundwasser ein Stickstoffstrom von 150 Nml/min von einer Vakuumpumpe angesaugt. Die Gasseite des Membranmoduls wurde dabei mit Hilfe von zwei Drosselventilen auf einen konstanten Betriebsdruck von etwa 10 kPa eingestellt. Nach Einstellung eines stabilen Versuchsregimes (ca. 60 min) wurden der Grundwassereingangs- und -ausgangsstrom durch Headspace-GC-Analysen beprobt. Die auf ihre Eingangswerte normierten Restkonzentrationen der CKW am Ausgang des Strippmoduls C_{Ausgang}/C_{Eingang} betrugen für VC und DCE <0,001, für TCE und PCE 0,003 und für 1,1,2,2-TeCA 0,008. Die Strippeffizienz war unter diesen Bedingungen (V_{Gas}/U_{Wasser} = 3) für alle untersuchten CKW besser als 99%.

## Patentansprüche

1. Verfahren zur Dekontamination von Wässern, insbesondere von Grundwässern, die stark und komplex mit organischen Halogenverbindungen (HKW) belastet sind,
***dadurch gekennzeichnet, dass***
das kontaminierte Wasser mit den HKW einer chemischen Vorbehandlung unterworfen wird, durch die schwer flüchtige HKW in leichter flüchtige Verbindungen umgewandelt werden, die HKW aus der Wasserphase in die Gasphase überführt und dort bei erhöhten Temperaturen, die größer als die Umgebungstemperaturen sind, einer katalytischen reduktiven Dehalogenierung unterzogen werden.

2. Verfahren nach Anspruch 1,
***dadurch gekennzeichnet*, *dass***
als Vorbehandlung eine alkalische Hydrolyse, eine reduktive Dehalogenierung mit Eisen, mit Zink oder unter Kombination der eingesetzten Mittel erfolgt.

3. Verfahren nach einem der Ansprüche 1 bis 2,
***dadurch gekennzeichnet, dass***
die Überführung der HKW aus der Wasser- in die Gasphase durch Strippen mit einem Inertgas, bevorzugt Stickstoff,
unter vermindertem Druck erfolgt.

4. Verfahren nach einem der Ansprüche 1 bis 3,
***dadurch gekennzeichnet, dass***
die Überführung der HKW aus der Wasser- in die Gasphase durch indirektes Strippen in einem Hohlfasermembran-Modul erfolgt, bei dem Wasser- und Gasphase nicht in direkten Kontakt treten, sondern der Stoffaustausch über eine hydrophobe Membran vermittelt wird.

5. Verfahren nach einem der Ansprüche 1 bis 4,
***dadurch gekennzeichnet, dass***
als Katalysator Metalle der 8. Nebengruppe des PSE mit einem Massenanteil von 0,1 bis 20 %, bevorzugt 0,5 bis 2 %, auf porösen Trägern verwendet werden, vorzugsweise Palladium und Nickel.

6. Verfahren nach einem der Ansprüche 1 bis 5,
***dadurch gekennzeichnet, dass***
die Dehalogenierung bei Temperaturen zwischen 50 und 400°C, vorzugsweise bei Temperaturen zwischen 100 und 350°C, stattfindet.

7. Verfahren nach einem der Ansprüche 1 bis 6,
***dadurch gekennzeichnet, dass***
die Dehalogenierung bei Katalysatorbelastungen zwischen 360 und 36 000 v/vh in einem wasserstoffhaltigen Gasstrom mit einem Wasserstoffanteil von 0.1 bis 99 Vol%, bevorzugt 0,5 bis 25 Vol%, erfolgt.

8. *Verfahren nach einem* der Ansprüche 1 bis 7,
***dadurch gekennzeichnet, dass***
zur Entfernung von schwefelhaltigen Verbindungen der Strippgasstrom vor der katalytischen Dehalogenierung über einen Absorber geleitet wird.

9. Verfahren nach Anspruch 8,
***dadurch gekennzeichnet, dass***
im Absorber Zinkoxid als Aktivkomponente eingesetzt wird.

10. Vorrichtung zur Dekontamination von Wässern, insbesondere von Grundwässern, die stark und komplex mit HKW belastet sind, zur Durchführung des Verfahrens nach einem der Ansprüche 1 bis 9 umfassend mindestens eine Vorbehandlungskammer (1), die aus einer in Reihe geschalteten Kaskade von 2 bis 10 Behältern besteht und an ihrem Eingang geeignete Vorrichtungen zur Dosierung von flüssigen Chemikalien besitzt, einen Strippapparat (2), eine Vakuumpumpe (3), einen Dehalogenierungsreaktor (5) mit Heizung und Katalysator sowie einen Halogenwasserstoff-Wäscher (6), eine Zuleitung für kontaminiertes Wasser (7), eine Zuleitung für Strippgas (8), jeweils eine Abflussleitung für gereinigtes Strippgas (10) und für dekontaminiertes Wasser (11).

11. Vorrichtung nach Anspruch 10,
***dadurch gekennzeichnet, dass***
die Vorbehandlungskammer (1) mit granuliertem Eisen gefüllt ist, das Teilchengrößen zwischen 1 und 20 mm und eine spezifische Oberfläche von 50 bis 5 000 m²/kg besitzt.

12. Vorrichtung nach Anspruch 10,
***dadurch gekennzeichnet, dass***
die Vorbehandlungskammer (1) mit granuliertem Zink gefüllt ist, das Teilchengrößen zwischen 1 und 20 mm und eine spezifische Oberfläche von 10 bis 1 000 m²/kg besitzt.

13. Vorrichtung nach einem der Ansprüche 10 bis 12,
***dadurch gekennzeichnet, dass***
die Vorbehandlungskammer (1) aus mehreren Sektionen besteht, die wahlweise mit Eisen- und Zinlzschüttungen gefüllt sind, wobei am Ende der Kammer immer eine Eisenschüttung platziert ist.

14. Vorrichtung nach einem der Ansprüche 10 bis 13,
***dadurch gekennzeichnet, dass***
der Strippapparat (2) vorzugsweise ein Hohlfasermembran-Modul ist.

15. Vorrichtung nach einem der Ansprüche 10 bis 14,
***dadurch gekennzeichnet, dass***
die Vakuumpumpe (3) so dimensioniert ist, dass sie auch bei hohen Gasflüssen noch einen Enddruck von 10 kPa aufrecht zu erhalten gestattet.

16. Vorrichtung nach einem der Ansprüche 10 bis 15,
***dadurch gekennzeichnet*, *dass***
der Dehalogenierungsreaktor (5) mit einer Heizung ausgestattet ist, die eine Erwärmung des Strippgasstromes auf Temperaturen bis 400°C gewährleistet, und mit einem Schüttbett gefüllt ist, das den Katalysator auf porösem Träger in pelletierter Form enthält.

17. Vorrichtung nach einem der Ansprüche 10 bis 16,
***dadurch gekennzeichnet, dass***
sie zusätzlich eine Zuführung (9) zur Wasserstoff-Zudosierung umfasst.

18. Vorrichtung nach einem der Ansprüche 10 bis 17,
***dadurch gekennzeichnet, dass***
sie zusätzlich einen Absorber (4) umfasst.

## Claims

1. A process for the decontamination of waters, especially groundwaters, which are heavily and complexly polluted with organic halogen compounds (HHC),
***characterized in that***
the contaminated water including the HHC is subjected to a chemical pre-treatment, by means of which low-volatility HHC are converted into more readily volatile compounds, the HHC are transferred from the aqueous phase to the gaseous phase and subjected therein to catalytic reductive dehalogenation at elevated temperatures higher than ambient temperature.

2. The process according to claim 1,
***characterized in that***
alkaline hydrolysis, reductive dehalogenation with iron, zinc, or with a combination of the agents employed is effected as pre-treatment.

3. The process according to any of claims 1 to 2,
***characterized in that***
transferring the HHC from the aqueous phase to the gaseous phase is effected by stripping with an inert gas, preferably nitrogen, under reduced pressure.

4. The process according to any of claims 1 to 3,
***characterized in that***
transferring the HHC from the aqueous phase to the gaseous phase is effected by indirect stripping in a hollow-fiber membrane module wherein the aqueous and gaseous phases do not make direct contact but rather, mass transfer is mediated by a hydrophobic membrane.

5. The process according to any of claims 1 to 4,
***characterized in that***
metals of subgroup VIII of the periodic system of the elements at a mass proportion of from 0.1 to 20%, preferably from 0.5 to 2%, on porous supports, preferably palladium and nickel, are used as catalyst.

6. The process according to any of claims 1 to 5,
***characterized in that***
dehalogenation takes place at temperatures between 50 and 400°C, preferably at temperatures between 100 and 350°C.

7. The process according to any of claims 1 to 6,
***characterized in that***
dehalogenation is effected at a catalyst load between 360 and 36,000 v/vh in a stream of gas containing hydrogen, the proportion of hydrogen being from 0.1 to 99 vol.-%, preferably from 0.5 to 25 vol.-%.

8. The process according to any of claims 1 to 7,
***characterized in that***
in order to remove sulfurous compounds, the stream of stripping gas is passed over an absorber prior to the catalytic dehalogenation.

9. The process according to claim 8,
***characterized in that***
zinc oxide is used as active component in the absorber.

10. A device for the decontamination of waters, especially groundwaters, which are heavily and complexly polluted with HHC, which device is used to perform the process according to any of claims 1 to 9 and comprises:
at least one pre-treatment chamber (1) comprising a cascade of from 2 to 10 containers connected in series and having suitable means for metering liquid chemicals at the inlet thereof, a stripping apparatus (2), a vacuum pump (3), a dehalogenation reactor (5) including heater and catalyst, and a hydrogen halide scrubber (6), a contaminated water feed line (7), a stripping gas feed line (8), and effluent lines (10, 11) for purified stripping gas and decontaminated water, respectively.

11. The device according to claim 10,
***characterized in that***
the pre-treatment chamber (1) is filled with granulated iron having a particle size between 1 and 20 mm and a specific surface area of from 50 to 5000 m²/kg.

12. The device according to claim 10,
***characterized in that***
the pre-treatment chamber (1) is filled with granulated zinc having a particle size between 1 and 20 mm and a specific surface area of from 10 to 1000 m²/kg.

13. The device according to any of claims 10 to 12,
***characterized in that***
the pre-treatment chamber (1) consists of several sections filled with iron and zinc beds as desired, an iron bed always being located at the end of the chamber.

14. The device according to any of claims 10 to 13,
***characterized in that***
the stripping apparatus (2) is preferably a hollow-fiber membrane module.

15. The device according to any of claims 10 to 14,
***characterized in that***
the vacuum pump (3) is dimensioned in such a way that a final pressure of 10 kPa can be maintained even at high gas flow.

16. The device according to any of claims 10 to 15,
***characterized in that***
the dehalogenation reactor (5) is equipped with a heater ensuring heating of the stream of stripping gas at temperatures up to 400°C and is filled with a bed including the catalyst on a porous support in pelletized form.

17. The device according to any of claims 10 to 16,
***characterized in that***
the device additionally comprises a feed line (9) for metering hydrogen.

18. The device according to any of claims 10 to 17,
***characterized in that***
the device additionally comprises an absorber (4).

## Revendications

1. Procédé de décontamination d'eaux, notamment d'eaux souterraines qui sont fortement contaminées de manière complexe par des composés organiques halogénés (hydrocarbures halogénés),
***caractérisé en ce que***
l'eau contaminée par les hydrocarbures halogénés est soumise à un prétraitement chimique, par lequel les hydrocarbures halogénés peu volatiles sont transformés en composés plus facilement volatiles, les hydrocarbures halogénés de la phase aqueuse sont transformés en phase gazeuse et à ce stade, à des températures élevées supérieures à la température ambiante, sont soumis à une déshalogénation réductrice catalytique.

2. Procédé selon la revendication 1,
***caractérisé en ce***
**qu'**en tant que prétraitement, on effectue une hydrolyse alcaline, une déshalogénation réductrice avec du fer, du zinc, ou avec une combinaison des agents utilisés.

3. Procédé selon une des revendications 1 à 2,
***caractérisé en ce que***
le transfert des hydrocarbures halogénés de la phase aqueuse en phase gazeuse s'effectue par stripping avec un gaz inerte, de préférence de l'azote, sous pression réduite.

4. Procédé selon une des revendications 1 à 3,
***caractérisé en ce que***
le transfert des hydrocarbures halogénés de la phase aqueuse en phase gazeuse s'effectue par stripping indirect dans un module de membranes à fibres creuses, dans lequel la phase aqueuse et la phase gazeuse n'entrent pas directement en contact, et l'échange de matière est effectué au travers d'une membrane hydrophobe.

5. Procédé selon une des revendications 1 à 4,
***caractérisé en ce***
**qu'**en tant que catalyseur, on utilise des métaux du 8^{ème} sous-groupe du système périodique élémentaire en une proportion en masse de 0,1 à 20 %, de préférence de 0,5 à 2 %, sur des supports poreux, de préférence du palladium et du nickel.

6. Procédé selon une des revendications 1 à 5,
***caractérisé en ce que***
la déshalogénation est produite à des températures comprises entre 50 et 400°C, de préférence entre 100 et 350°C.

7. Procédé selon une des revendications 1 à 6,
***caractérisé en ce que***
la déshalogénation s'effectue à une charge de catalyseur entre 360 et 36 000 v/vh dans un courant de gaz hydrogéné contenant une proportion d'hydrogène de 0,1 à 99 % en volume, de préférence de 0,5 à 25 % en volume.

8. Procédé selon une des revendications 1 à 7,
***caractérisé en ce que**,*
pour éliminer les composés soufrés, le courant de gaz de strip passe au travers d'un absorbeur avant la déshalogénation catalytique.

9. Procédé selon une des revendications 1 à 8,
***caractérisé en ce***
**qu'**on utilise de l'oxyde de zinc dans l'absorbeur en tant que composant actif.

10. Dispositif de décontamination d'eaux, notamment d'eaux souterraines, qui sont fortement contaminées de manière complexe par des hydrocarbures halogénés, destiné à l'exécution du procédé selon une des revendications 1 à 9,
*comprenant*
au moins une chambre de prétraitement (1), qui se compose d'une cascade de 2 à 10 récipients montés en série comportant à leur admission des dispositifs de dosage de produits chimiques liquides, un appareil de stripping (2), une pompe à vide (3), un réacteur de déshalogénation (5) comportant du chauffage et du catalyseur ainsi qu'un laveur d'hydrogène halogéné (6), une conduite d'alimentation pour l'eau contaminée (7), une conduite d'alimentation pour le gaz de stripping (8), respectivement une conduite d'évacuation pour le gaz de strip purifié (10) et une conduite d'écoulement pour l'eau décontaminée (11).

11. Dispositif selon la revendication 10,
***caractérisé en ce que***
la chambre de prétraitement (1 ) est remplie avec du fer granulé, qui possède une granulométrie entre 1 et 20 mm et une surface spécifique de 50 à 5000 m²/kg.

12. Dispositif selon la revendication 10,
***caractérisé en ce que***
la chambre de prétraitement (1) est remplie avec du zinc granulé, qui possède une granulométrie entre 1 et 20 mm et une surface spécifique de 10 à 1000 m²/kg.

13. Dispositif selon une des revendications 10 à 12,
***caractérisé en ce que***
la chambre de prétraitement (1) se compose de plusieurs sections, qui sont remplies au choix de garnissages de fer et de zinc, un garnissage de fer étant toujours disposé en fin de chambre.

14. Dispositif selon une des revendications 10 à 13,
***caractérisé en ce que***
l'appareil de stripping (2) est de préférence un module à membrane à fibres creuses.

15. Dispositif selon une des revendications 10 à 14,
***caractérisé en ce que***
la pompe à vide (3) est dimensionnée de telle manière qu'elle permet de maintenir même pour des débits de gaz élevés encore une pression en sortie de 10 kPa.

16. Dispositif selon une des revendications 10 à 15,
***caractérisé en ce que***
le réacteur de déshalogénation (5) est équipé d'un chauffage qui garantit un réchauffage du courant gazeux de stripping à des températures allant jusqu'à 400°C, et qui est rempli d'un lit de matière en vrac qui contient le catalyseur sur support poreux sous forme de boulettes.

17. Dispositif selon une des revendications 10 à 16,
***caractérisé en ce***
**qu'**il comprend en plus une conduite d'alimentation (9) pour l'ajout dosé de l'hydrogène.

18. Dispositif selon une des revendications 10 à 17,
***caractérisé en ce***
**qu'**il comprend en plus un absorbeur (4).
